# EUROPÄISCHE PATENTSCHRIFT

(11) **EP 1 809 441 B1**
(45) Veröffentlichungstag und Bekanntmachung des Hinweises auf die Patenterteilung: **06.01.2010**
(21) Anmeldenummer: 05811685.6
(22) Anmeldetag: 07.11.2005
(51) Int. Cl.: B25B 1/24

(54) **SPANN- ODER GREIFVORRICHTUNG INSBESONDERE LINEAR- ODER ZENTRISCHGREIFER**
TENSIONING OR GRIPPING DEVICE IN PARTICULAR A LINEAR OR CENTERING GRIPPER
DISPOSITIF DE SERRAGE ET DE PREHENSION, EN PARTICULIER PINCE LINEAIRE OU CENTRALE

(30) Priorität: 10.11.2004 DE 102004054177
(43) Veröffentlichungstag der Anmeldung: 25.07.2007
(73) Patentinhaber: Schunk GmbH & Co. KG Spann- und Greiftechnik, 74348 Lauffen am Neckar (DE)
(72) Erfinder: WIELAND, Wolfgang, 74360 Illsfeld (DE)
(74) Vertreter: Bulling, Alexander
(86) Internationale Anmeldenummer: PCT/EP2005/011865
(87) Internationale Veröffentlichungsnummer: WO 2006/050880

(56) Entgegenhaltungen:
- EP-A- 0 744 249
- DE-A1- 19 604 649
- DE-A1- 19 826 435
- US-A- 5 720 476
- US-A- 6 139 001

## Beschreibung

Die Erfindung betrifft eine Spann- oder Greifeinrichtung, insbesondere einen Linear- oder Zentrischgreifer, mit wenigstens einer beweglich geführten Grundbacke und mit einer auf die Grundbacke aufsetzbaren Aufsatzbacke, wobei die Aufsatzbacke zwei wenigstens abschnittsweise quer zur Verfahrrichtung der Grundbacke verlaufende und in Verfahrrichtung der Grundbacke hintereinander liegende Kopplungsabschnitte zur Verbindung mit der Grundbacke aufweist. Die Erfindung betrifft auch eine Grundbacke und eine Aufsatzbacke für solche Spann- oder Greifeinrichtungen.

Aus der DE 102 19 524 A1 ist ein Spannfutter bekannt geworden, das eine Grundbacke vorsieht, auf der lösbar eine Aufsatzspannbacke befestigbar ist. Zur Befestigung der Aufsatzspannbacke ist in der Grundbacke ein parallel zur Spannfutterachse vorgesehener Stift angeordnet, der in eine an der Aufsatzspannbacke vorgesehene Stiftaufnahme eingreift. Bei diesem Stand der Technik hat sich als problematisch herausgestellt, dass eine spielfreie Anordnung der Aufsatzspannbacke auf der Grundbacke nur mit sehr genauen Fertigungstoleranzen der Führung des Stifts und der Stiftaufnahme möglich ist.

Aus der DE 38 23 933 A1 ist eine Spanneinheit bekannt geworden, bei der ein Spannkörper auf einer Hauptbacke angeordnet ist. Auch bei diesem Stand der Technik ist, entsprechend dem Stand der Technik gemäß der DE 102 19 524 A1, ein Stift vorgesehen, der parallel zur Futterachse in eine am Spannkörper vorgesehene Stiftaufnahme eingreift. Auch hier müssen Fertigungstoleranzen sehr genau eingehalten werden, um eine spielfreie Anordnung des Spannkörpers auf der Hauptbacke realisieren zu können.

Aus der US 6,139,001 ist eine Spanneinrichtung mit auf Grundbacken aufsetzbaren Aufsatzbacken bekannt geworden. Ferner ist aus der US 5,720,476 ist eine Spanneinrichtung mit den Merkmalen des Oberbegriffs des Anspruchs bekannt geworden.

Der vorliegenden Erfindung liegt die Aufgabe zugrunde, eine Spann- oder Greifvorrichtung bereitzustellen, bei der eine Aufsatzbacke auf einer Grundbacke möglichst spielfrei, insbesondere in Verfahrrichtung, auf einfache Art und Weise angeordnet werden kann.

Diese Aufgabe wird mit einer Spann- oder Greifeinrichtung mit den Merkmalen des Anspruchs 1 gelöst. Hierdurch wird gewährleistet, dass in Verfahrrichtung der Grundbacke kein Spiel zwischen der Grundbacke und der Aufsatzbacke vorhanden ist. Dennoch ist eine sichere Halterung der Aufsatzbacke an der Grundbacke möglich.

Gemäß der Erfindung ist ferner vorgesehen, dass der Bolzen den mit ihm zusammenwirkenden Koppelabschnitt wenigstens abschnittsweise derart durchgreift, dass das freie Ende des Bolzens zugänglich ist und entgegen die Federkraft beaufschlagbar ist. Dies hat den Vorteil, dass zum Lösen der Aufsatzbacke von der Grundbacke das zugängliche, freie Ende des Bolzens entgegen der Federkraftbeaufschlagung bewegbar ist. Dadurch kann der Bolzen derart ausgelenkt werden, dass er nicht mehr mit dem Koppelabschnitt zusammenwirkt und dass die Aufsatzbacke von der Grundbacke entfernt werden kann. Dabei ist insbesondere denkbar, dass das freie, zugängliche Ende des Bolzens die Grundbacke und/oder die Aufsatzbacke in Längsrichtung des Bolzens überragt.

Die Grundbacke kann dabei ein gegen den Bolzen wirkendes Federelement umfassen. Das Federelement kann dabei vorteilhafterweise gefangen in einer Federaufnahme oder einem Federkäfig in der Grundbacke angeordnet sein.

Erfindungsgemäß ist ferner denkbar, dass der Bolzen einen Kontaktabschnitt zur Anlage gegen einen Koppelabschnitt aufweist, wobei der Kontaktabschnitt und/oder der mit dem Kontaktabschnitt zusammenwirkende Koppelabschnitt wenigstens abschnittsweise keil- und/oder konusartig ausgebildet ist. Hierdurch kann erreicht werden, dass über das Zusammenwirken des Bolzens mit dem entsprechenden Koppelabschnitt auch Kräfte quer zur Verfahrrichtung der Grundbacke übertragen werden können.

Besonders vorteilhaft ist, wenn der mit dem Kontaktabschnitt zusammenwirkende Koppelabschnitt komplementär zum Kontaktabschnitt ausgebildet ist. Hierdurch kann insbesondere eine flächige Anlage des Kontaktabschnitts am Koppelabschnitt realisiert werden.

Ferner kann vorgesehen sein, dass der Koppelabschnitt ein einseitig offenes Loch oder Langloch umfasst, in welches der Bolzen wenigstens abschnittsweise seitlich einführbar ist. Der Bolzen kann dazu entweder einen Einschnitt, insbesondere einen Ringeinschnitt, oder einen Bund, insbesondere einen Ringbund vorsehen, der dann mit dem Koppelabschnitt zusammenwirkt. Der Einschnitt oder der Bund kann dabei auch keil- und/oder konusartig ausgebildet sein. Der an das offene Loch oder Langloch angrenzende Bereich des Koppelabschnitts wirkt dann mit dem Einschnitt oder der Erhebung des Bolzens zusammen.

Der Bolzen kann gemäß einer Weiterbildung der Erfindung zur Begrenzung der Verschiebbarkeit des Bolzens einen Anschlag umfassen. Der Anschlag des Bolzens wirkt dabei vorzugsweise gegen die Grundbacke oder gegen einen an der Grundbacke vorgesehenen Stift.

Gemäß einer Weiterbildung der Erfindung ist möglich, dass der nicht mit dem Bolzen zusammenwirkende Koppelabschnitt einen Keilabschnitt zum Hintergreifen und/oder Verkeilen mit der Anlagefläche der Grundbacke umfasst. Hierdurch kann erreicht werden, dass über den Keilabschnitt die Aufsatzbacke eine vorbestimmte, gegenüber der Grundbacke definierte Position einnehmen kann. Die Anlagefläche kann dabei einen Gegenkeilabschnitt vorsehen, der komplementär zum Teilabschnitt des Koppelabschnitts ausgebildet sein kann. Hierdurch kann ein optimales Anordnen der Aufsatzbacke an der Grundbacke erzielt werden.

Dabei ist vorteilhaft, wenn sowohl der Keilabschnitt und die mit dem Keilabschnitt zusammenwirkende Anlagefläche der Grundbacke als auch der Bolzen, beziehungsweise sein Kontaktabschnitt, und der mit dem Bolzen zusammenwirkende Koppelabschnitt derart ausgebildet sind, dass bei auf die Grundbacke aufgesetzter Aufsatzbacke die Aufsatzbacke aufgrund der Federbeaufschlagung des Bolzens gegen die Grundbacke beaufschlagt wird. Dies kann insbesondere durch eine geeignete Wahl und Ausrichtung des Keilabschnitts sowie des Kontaktabschnitts des Bolzens erreicht werden.

Insbesondere zeichnet sich eine vorteilhafte Ausführungsform der Erfindung dadurch aus, dass beim Aufsetzen der Aufsatzbacke auf die Grundbacke die Aufsatzbacke mit dem Koppelabschnitt, der nicht zum Zusammenwirken mit dem Bolzen vorgesehen ist, an die Anlagefläche der Grundbacke anlegbar ist und dass die Aufsatzbacke dann um diesen Koppelabschnitt so weit in Richtung der Grundbacke verschwenkbar ist, bis der andere Koppelabschnitt in den Eingriffsbereich des Bolzens gelangt. Hierdurch kann eine einfache Art und Weise des Aufsetzens der Aufsatzbacke auf die Grundbacke erreicht werden.

Dabei kann erfindungsgemäß vorgesehen sein, dass der Bolzen und/oder der mit dem Bolzen zusammenwirkende Koppelabschnitt Führungsschrägen derart aufweisen, dass beim Gelangen des Koppelabschnitts in den Eingriffsbereich des Bolzens der Bolzen zunächst entgegen der Federkraft verschoben wird und in der Endmontagelage der Bolzen in eine Halterungslage einschnappt. Dies hat den Vorteil, dass zur Anordnung der Aufsatzbacke an die Grundbacke keine weiteren Montageschritte oder Werkzeuge erforderlich sein können. Die Aufsatzbacke wird gemäß dieser Ausführungsform der Erfindung auf die Grundbacke aufgesetzt und verschnappt mit dieser.

Ferner kann erfindungsgemäß vorgesehen sein, dass Verriegelungsmittel zum Verriegeln des Bolzens in seiner gegen den einen Koppelabschnitt wirkenden Befestigungslage vorgesehen sind. Dadurch wird folglich in der Endmontagelage der Bolzen in seiner axialen Richtung gesichert und es wird gewährleistet, dass ein selbsttätiges Lösen des Bolzens und damit der Aufsatzbacke, nicht möglich ist. Als Verriegelungsmittel kommen insbesondere als quer zur Längsachse des Bolzens verlaufende, schraubbare Verriegelungsstifte in Betracht. Ferner ist denkbar, als Verriegelungsmittel eine Exzenterschraube einzusetzen, die den Bolzen quer zu seiner Längsachse kraft- und/oder formschlüssig beaufschlagt.

Ferner kann erfindungsgemäß vorgesehen sein, dass die Grundbacke oder, bei Vorhandensein mehrerer Grundbacken, die Grundbacken über ein Keilhakengetriebe in Verfahrrichtung verfahrbar sind. Über das Keilhakengetriebe kann eine senkrecht zur Verfahrrichtung der Grundbacken verlaufende Bewegung eines Stellgliedes auf die Grundbacke umgelenkt werden. Über den zu wählenden Keilwinkel kann ein gewünschtes Übersetzungsverhältnis erzielbar sein.

Weitere Merkmale und Einzelheiten der Erfindung sind der folgenden Beschreibung zu entnehmen, in der die Erfindung anhand des in der Zeichnung dargestellten Ausführungsbeispiels näher beschrieben und erläutert ist.

### Es zeigen:

- Figur 1: eine perspektivische Ansicht einer erfindungsgemäßen Greifeinrichtung,
- Figur 2: eine perspektivische Ansicht einer Grundbacke und einer Aufsatzbacke in Einzelteildarstellung,
- Figur 3: einen Längsschnitt durch die Greifeinrichtung gemäß Figur 1,
- Figur 4a: eine Seitenansicht der Aufsatzbacke gemäß Figur 2,
- Figur 4b: eine Vorderansicht der Aufsatzbacke gemäß Figur 4a,
- Figur 5: einen Längsschnitt durch die Grundbacke gemäß Figur 2, und
- Figur 6: einen Längsschnitt durch den in der Figur 3 dargestellten Bolzen in Einzelteildarstellung.

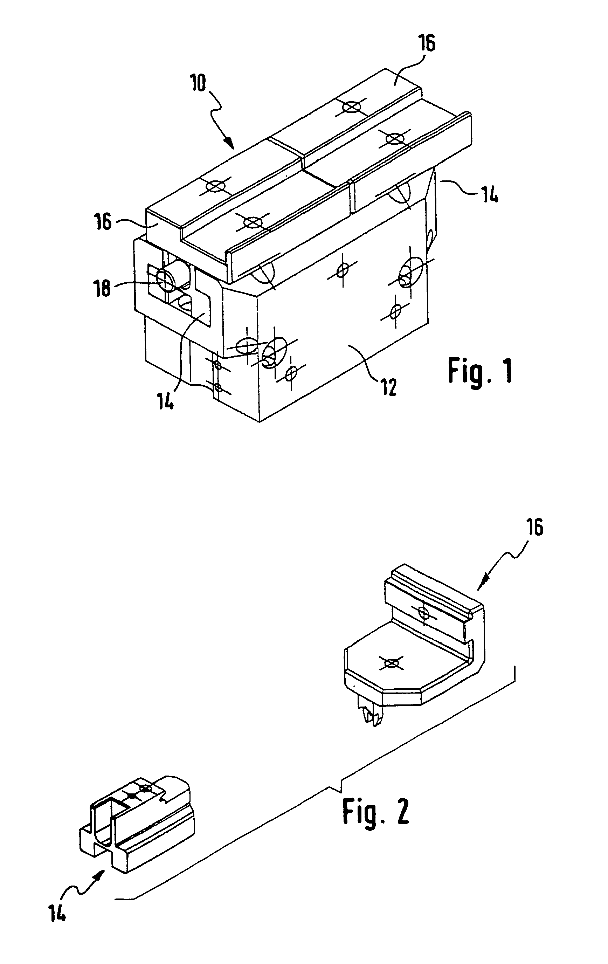

In der Figur 1 ist eine erfindungsgemäße Greifeinrichtung 10 in Form eines 2-Backen-Parallelgreifers dargestellt. Die Greifeinrichtung 10 umfasst ein Grundgehäuse 12, in dem zwei Grundbacken 14 entlang einer Linie aufeinander zu beziehungsweise voneinander weg verfahrbar angeordnet sind. Auf jeder der beiden Grundbacken ist eine Aufsatzbacke 16 angeordnet. An den Grundbacken 14 sind jeweils Bolzen 18 angeordnet, mit denen die Aufsatzbacken 16 an den Grundbacken 14 befestigbar sind.

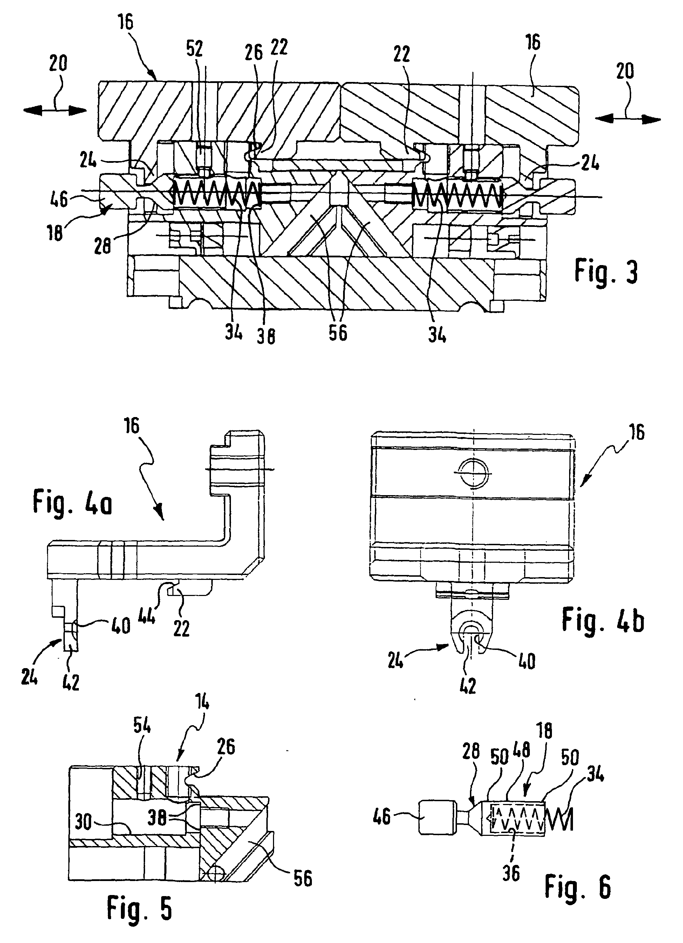

In der Figur 2 ist die Grundbacke 14 und eine im Vergleich zur Figur 1 etwas anderes ausgebildete Aufsatzbacke 16 dargestellt. Einzelheiten zur Grundbacke 14 und der Aufsatzbacke 16 werden in den Figuren 3 bis 6 erläutert.

In dem in der Figur 3 dargestellten Längsschnitt wird deutlich, dass die Aufsatzbacken 16 jeweils zwei quer zur mit dem Doppelpfeil 20 angedeuteten Verfahrrichtung verlaufende Koppelabschnitte 22 und 24 aufweisen. Der Koppelabschnitt 22 wirkt bei auf die Grundbacke 14 aufgesetzter Aufsatzbacke 16 gegen eine grundbackenseitige Anlagefläche 26. Der Koppelabschnitt 24 wird bei auf die Grundbacke 14 aufgesetzter Aufsatzbacke 16 von dem Bolzen 18, beziehungsweise von einem kegelartig ausgebildeten Kontaktabschnitt 28 des Bolzens 18, beaufschlagt. Der Bolzen 18 ist dabei in einer in der Figur 5 deutlich erkennbaren Bolzenführung 30 in Verfahrrichtung 20 der Grundbacke beweglich gelagert. Der Bolzen 18 wird dabei von einer Schraubenfeder 34 gegen den Koppelabschnitt 24 beaufschlagt. Die Schraubenfeder 34 stützt sich dabei einerseits an der Stirnseite einer im Bolzen vorgesehenen, sacklochartigen Federaufnahme 36 und andererseits an einem grundbackenseitigen Anschlag 38 ab. Aufgrund des federkraftbeaufschlagten Bolzens 18 wird erreicht, dass zur Halterung der Aufsatzbacke 16 an der Grundbacke 14 der Koppelabschnitt 22 gegen die grundbackenseitige Anlagefläche 26 beaufschlagt wird.

Wie aus den Figuren 3, 4 und 6 deutlich wird, ist der Koppelabschnitt 24 komplementär zum keilartigen Kontaktabschnitt 28 ausgebildet, das heißt der Koppelabschnitt 24 umfasst eine an den Kontaktabschnitt 28 flächig anliegende Anlagefläche 40. Wie insbesondere aus der Ansicht nach Figur 4b deutlich wird, verläuft diese Anlagefläche 40 ringabschnittsartig um das geschlossene Ende eines einseitig offenen Langloches 42 am Koppelabschnitt 24. Beim Aufsetzen der Aufsatzbacke 16 auf die jeweilige Grundbacke 14 wird der Bolzen 18, beziehungsweise sein Kontaktabschnitt 28, in das Langloch 42 eingeführt, bis der Kontaktabschnitt 28 an der Anlagefläche 40 anliegt. Dabei kann beim Aufsetzen der Aufsatzbacke 16 auf die Grundbacke 14 zunächst der Koppelabschnitt 22 mit der jeweiligen Anlagefläche 28 in Wirkverbindung gebracht werden, wobei die Aufsatzbacke 16 dann um den Koppelabschnitt 22, beziehungsweise die Anlagefläche 26, in Richtung der Grundbacke 14 so weit verschwenkbar ist, bis der Koppelabschnitt 24 in den Eingriffsbereich des Bolzens 18 gelangt. Vorteilhafterweise sieht dabei der Bolzen 18 und/oder der Koppelabschnitt 24 Einführschrägen derart vor, dass beim Gelangen des Koppelabschnitts 24 in den Eingriffsbereich des Bolzens 18 der Bolzen zunächst entgegen der Federkraft verschoben wird und dann in der Endmontagelage in seine Halterungslage, in der die Anlagefläche 40 an dem Kontaktabschnitt 28 anliegt, einschnappt.

Wie aus den Figuren 3, 4 und 5 deutlich wird, weist der Koppelabschnitt 22 einen Keilabschnitt 44 auf, der schräg zur Verfahrrichtung 20 verläuft und dem Koppelabschnitt 24 zugewandt ist. Bei dem in den Figuren dargestellten Ausführungsbeispiel ist die grundbackenseitige Anlagefläche 26 parallel zur Keilfläche 44 ausgebildet, das heißt die Anlagefläche 26 verläuft schräg zur Verfahrrichtung 20 und ist dem Keilabschnitt 44 zugewandt. Hierdurch wird erreicht, dass beim Beaufschlagen des Koppelabschnitts 24 durch den federkraftbeaufschlagten Bolzen 18 die Aufsatzbacke 16 in Richtung der Grundbacke 14 beaufschlagt wird. Die Aufsatzbacke 16 wird folglich in Richtung der Grundbacke verkeilt. Dies wird zudem durch die ebenfalls schräg verlaufende Anlagefläche 40 am Koppelabschnitt 24 und den dazu komplementär ausgebildeten Kontaktabschnitt 28 am Bolzen 18 verstärkt. Beim Greifen eines Gegenstandes zwischen den beiden Aufsatzbacken 16 wird die Keilfläche 44 ebenfalls gegen die Anschlagfläche 26 beaufschlagt.

Wie aus der Figur 3 deutlich wird, durchgreift der Bolzen 18 bei auf die Grundbacke 14 aufgesetzter Aufsatzbacke 16 abschnittsweise das Langloch 42 derart, dass das freie Ende 46 des Bolzens 18 zugänglich ist. Durch manuelles Drücken des freien Endes 46 entgegen die Kraft der Feder 34 wird der Kontaktabschnitt 28 des Bolzens 18 aus dem Eingriffsbereich des Koppelabschnitts 24 ausgelenkt und die Aufsatzbacke 16 kann von der Grundbacke 14 abgenommen werden. Dadurch kann ein einfaches und schnelles Abnehmen beziehungsweise Wechseln der Aufsatzbacken 16 erfolgen. Zusätzliche Werkzeuge sind nicht erforderlich.

Um die Verschiebbarkeit des Bolzens 18 zu begrenzen, ist am Bolzen 18 ein in Bewegungsrichtung 20 verlaufendes Langloch 48 vorgesehen, dessen einander gegenüberliegende Enden 50 die Bewegung des Bolzens 18 begrenzen. In montiertem Zustand greift ein in der Figur 3 dargestellter Anschlagstift 52 in das Langloch 48 ein. Der Anschlagstift 52 ist dabei in ein an der Grundbacke 14 angeordnetes, in der Figur 5 dargestelltes Gewinde 54 einschraubbar.

Wie aus Figur 3 deutlich wird, weisen die beiden Grundbacke 14 an der einander zugewandten Seite Schrägzugnuten 56 auf, in die ein nicht dargestelltes, senkrecht zur Verfahrrichtung 20 verfahrbares Stellglied eingreift. Durch axiales Verstellen des Verstellglieds werden die beiden Grundbacke aufeinander zu beziehungsweise voneinander weg bewegt. Die Schrägzugnuten 56 zusammen mit dem Stellglied bilden ein Keilhakengetriebe.

## Patentansprüche

1. Spann- oder Greifeinrichtung (10), insbesondere Linear- oder Zentrischgreifer, mit wenigstens einer beweglich geführten Grundbacke (14) und mit einer auf die Grundbacke (14) aufsetzbaren Aufsatzbacke (16), wobei die Aufsatzbacke (16) zwei wenigstens abschnittsweise quer zur Verfahrrichtung (20) der Grundbacke (14) verlaufende und in Verfahrrichtung (20) der Grundbacke (14) hintereinander liegende Koppelabschnitte (22, 24) zur Verbindung mit der Grundbacke (14) aufweist, wobei die Grundbacke (14) einen in Verfahrrichtung (20) der Grundbacke (14) geführten, federkraftbeaufschlagten Bolzen (18) umfasst, der bei auf die Grundbacke (14) aufgesetzter Aufsatzbacke (16) zur Halterung der Aufsatzbacke (16) derart gegen einen Koppelabschnitt (24) wirkt, dass der andere Koppelabschnitt (22) gegen eine an der Grundbacke (14) angeordnete Anlagefläche (26) beaufschlagt wird, **dadurch gekennzeichnet, dass** der Bolzen (18) den mit ihm zusammenwirkenden Koppelabschnitt (24) wenigstens abschnittsweise derart durchgreift, dass das freie Ende (46) des Bolzens (18) zugänglich und entgegen der Federkraft beaufschlagbar ist.

2. Einrichtung (10) nach Anspruch 1, **dadurch gekennzeichnet, dass** die Grundbacke (14) ein gegen den Bolzen (18) wirkendes Federelement (34) umfasst.

3. Einrichtung (10) nach Anspruch 1 oder 2, **dadurch gekennzeichnet, dass** der Bolzen (18) einen Kontaktabschnitt (28) zur Anlage gegen einen Koppelabschnitt (24) aufweist, wobei der Kontaktabschnitt (28) und/oder der dem Kontaktabschnitt (28) zusammenwirkende Koppelabschnitt (24) wenigstens abschnittsweise keil- und/oder konusartig ausgebildet ist.

4. Einrichtung (10) nach Anspruch 3, **dadurch gekennzeichnet, dass** der mit dem Kontaktabschnitt (28) zusammenwirkende Koppelabschnitt (24, 40) komplementär zum Kontaktabschnitt (28) ausgebildet ist.

5. Einrichtung (10) nach wenigstens einem der vorhergehenden Ansprüche, **dadurch gekennzeichnet, dass** der Koppelabschnitt (24) ein einseitig offenes Loch oder Langloch (42) umfasst, in welches der Bolzen (18) wenigstens abschnittsweise einführbar ist.

6. Einrichtung (10) nach einem der vorhergehenden Ansprüche, **dadurch gekennzeichnet, dass** der Bolzen (18) wenigstens einen die Verschiebbarkeit des Bolzens begrenzenden Anschlag (50) umfasst.

7. Einrichtung (10) nach einem der vorhergehenden Ansprüche, **dadurch gekennzeichnet, dass** der nicht mit dem Bolzen zusammenwirkende Koppelabschnitt (22) einen Keilabschnitt (44) zum Hintergreifen und/oder Verkeilen mit der Anlagefläche (26) der Grundbacke (14) umfasst.

8. Einrichtung (10) nach Anspruch 7, **dadurch gekennzeichnet, dass** sowohl der Keilabschnitt (44) und die mit dem Keilabschnitt (44) zusammenwirkende Anlagefläche (26) der Grundbacke (14) als auch der Bolzen (18) und der mit dem Bolzen (18) zusammenwirkende Koppelabschnitt (24, 40) derart ausgebildet sind, dass bei auf die Grundbacke (14) aufgesetzter Aufsatzbacke (16) die Aufsatzbacke (16) in Richtung der Grundbacke (14) beaufschlagt wird.

9. Einrichtung (10) nach einem der vorhergehenden Ansprüche, **dadurch gekennzeichnet, dass** beim Aufsetzen der Aufsatzbacke (16) auf die Grundbacke (14) die Aufsatzbacke (16) mit dem Koppelabschnitt (22), der nicht zum Zusammenwirken mit dem Bolzen vorgesehen ist, an die Anlagefläche (26) der Grundbacke (14) anlegbar ist und dass die Aufsatzbacke (16) dann um diesen Koppelabschnitt (22) so weit in Richtung der Grundbacke (14) verschwenkbar ist, bis der andere Koppelabschnitt (24) in den Eingriffsbereich des Bolzens (18) gelangt.

10. Einrichtung (10) nach Anspruch 9, **dadurch gekennzeichnet, dass** der Bolzen (18) und/oder der mit dem Bolzen zusammenwirkende Koppelabschnitt (24) Führungsschrägen derart aufweisen, dass beim Gelangen des Koppelabschnitts (24) in den Eingriffsbereich des Bolzens (18) der Bolzen (18) zunächst entgegen der Federkraft verschoben wird und in der Endmontagelage der Bolzen (18) in eine Halterungslage einschnappt.

11. Einrichtung (10) nach einem der vorhergehenden Ansprüche, **dadurch gekennzeichnet, dass** Verrieglungsmittel zum Verriegeln des Bolzens in seiner gegen den einen Koppelabschnitt wirkenden Befestigungslage vorgesehen sind.

12. Einrichtung (10) nach einem der vorhergehenden Ansprüche, **dadurch gekennzeichnet, dass** die Grundbacke oder, bei Vorhandensein mehrerer Grundbacken, die Grundbacken über ein Keilhakengetriebe (56) in Verfahrrichtung verfahrbar sind.

## Claims

1. Clamping or gripping device (10), in particular, a linear or centering gripper, comprising at least one displaceable base jaw (14) and a false jaw (16) which may be disposed onto the base jaw (14), wherein the false jaw (16) comprises for coupling with the base jaw (14) two coupling sections (22, 24) which extend, at least in sections, transversely to the direction of displacement (20) of the base jaw (14), and are disposed behind each other in the direction of displacement (20) of the base jaw (14), wherein the base jaw (14) comprises a spring force-loaded bolt (18) which is guided in the direction of displacement (20) of the base jaw (14), and which acts against a coupling section (24) when the false jaw (16) is disposed onto the base jaw (14) for holding the false jaw (16), such that the other coupling section (22) is loaded against an abutment surface (26) which is disposed on the base jaw (14), **characterized in that** the bolt (18) penetrates at least through sections of the coupling section (24) cooperating therewith, such that the free end (46) of the bolt (18) is accessible and can be loaded against the spring force.

2. Device (10) according to claim 1, **characterized in that** the base jaw (14) comprises a spring element (34) which acts against the bolt (18).

3. Device (10) according to claim 1 or 2, **characterized in that** the bolt (18) comprises a contact section (28) for abutment against a coupling section (24), wherein the contact section (28) and/or the coupling section (24) that cooperates with the contact section (28) is/are, at least in sections, designed as a wedge and/or cone.

4. Device (10) according to claim 3, **characterized in that** the coupling section (24, 40) that cooperates with the contact section (28) is designed complementarily to the contact section (28).

5. Device (10) according to any one of the preceding claims, **characterized in that** the coupling section (24) has a hole or elongated hole (42) which is open on one side and into which at least sections of the bolt (18) can be inserted.

6. Device (10) according to any one of the preceding claims, **characterized in that** the bolt (18) comprises at least one stop (50) which delimits the displaceability of the bolt.

7. Device (10) according to any one of the preceding claims, **characterized in that** the coupling section (22) which does not cooperate with the bolt comprises a wedge section (44) for engagement behind and/or wedging with the abutment surface (26) of the base jaw (14).

8. Device (10) according to claim 7, **characterized in that** the wedge section (44), the abutment surface (26) of the base jaw (14), which cooperates with the wedge section (44), the bolt (18), and the coupling section (24, 40) that cooperates with the bolt (18) are designed such that when the false jaw (16) is disposed onto the base jaw (14), the false jaw (16) is loaded in the direction of the base jaw (14).

9. Device (10) according to any one of the preceding claims, **characterized in that,** when the false jaw (16) is disposed onto the base jaw (14), the false jaw (16) with coupling section (22), which does not cooperate with the bolt, can be disposed onto the abutment surface (26) of the base jaw (14) and the false jaw (16) can be pivoted about this coupling section (22) in the direction of the base jaw (14) until the other coupling section (24) reaches the engagement area of the bolt (18).

10. Device (10) according to claim 9, **characterized in that** the bolt (18) and/or the coupling section (24) that cooperates with the bolt have guiding slopes, such that when the coupling section (24) reaches the engagement area of the bolt (18), the bolt (18) is initially displaced against the spring force and snaps into a holding position in the final mounting position of the bolt (18).

11. Device (10) according to one of the preceding claims, **characterized in that** the bolt is locked in its mounting position, acting against the coupling section, by a locking means.

12. Device (10) according to any one of the preceding claims, **characterized in that** the base jaw or, if present, several base jaws can be displaced in the direction of displacement via a wedge hook gearing (56).

## Revendications

1. Dispositif de serrage ou de préhension (10), en particulier dispositif de préhension linéaire ou central, comportant au moins un mors de base (14) guidé de façon mobile et un mors rapporté (16) pouvant venir sur le mors de base (14), le mors rapporté (16) présentant deux sections de couplage (22, 24) situées l'une derrière l'autre dans le sens de déplacement (20) du mors de base (14) et s'étendant au moins par endroits perpendiculairement au sens de déplacement (20) du mors de base (14), lesquelles sections étant destinées au couplage avec le mors de base (14), le mors de base (14) comportant un boulon à ressort (18) guidé dans le sens de déplacement (20) du mors de base (14) destiné, lorsque le mors rapporté (16) vient s'appuyer sur le mors de base (14), à maintenir le mors rapporté (16) contre une section de couplage (24) de façon à ce que l'autre section de couplage (22) vienne reposer contre une surface d'appui (26) agencée sur le mors de base (14), **caractérisé en ce que** le boulon (18) vient s'engager au moins par endroits avec la section de couplage (24) en coopération avec lui, de telle façon que l'extrémité libre (46) du boulon (18) est accessible et peut être sollicitée à l'encontre de l'élasticité du ressort.

2. Dispositif (10) selon la revendication 1, **caractérisé en ce que** le mors de base (14) comprend un élément ressort (34) agissant à l'encontre du boulon (18).

3. Dispositif (10) selon la revendication 1 ou 2, **caractérisé en ce que** le boulon (18) présente une section de contact (28) destinée à venir s'appuyer contre une section de couplage (24), la section de contact (28) et/ou la section de couplage (24) coopérant avec la section de contact (28) étant réalisée(s) au moins par endroits cunéiformes et/ou coniques.

4. Dispositif (10) selon la revendication 3, **caractérisé en ce que** la section de couplage (24, 40) coopérant avec la section de contact (28) est réalisée complémentaire à la section de contact (28).

5. Dispositif (10) selon au moins l'une des revendications précédentes, **caractérisé en ce que** la section de couplage (24) comprend un trou ou trou oblong (42) ouvert sur un côté dans lequel on peut introduire le boulon (18) au moins par endroits.

6. Dispositif (10) selon l'une des revendications précédentes, **caractérisé en ce que** le boulon (18) comporte au moins une butée (50) limitant sa mobilité.

7. Dispositif (10) selon l'une des revendications précédentes, **caractérisé en ce que** la section de couplage (22) ne coopérant pas avec le boulon comprend une section de coin (44) destinée à venir s'engager dans et/ou à bloquer la surface d'appui (26) du mors de base (14).

8. Dispositif (10) selon la revendication 7, **caractérisé en ce que,** aussi bien la section de coin (44) et la surface d'appui (26) du mors de base (14) coopérant avec la section de coin (44), que le boulon (18) et la section de couplage (24, 40) coopérant avec le boulon (18), sont réalisés de telle façon que, lorsque le mors rapporté (16) vient se poser sur le mors de base (14), le mors rapporté (16) est sollicité dans le sens du mors de base (14).

9. Dispositif (10) selon l'une des revendications précédentes, **caractérisé en ce que,** lorsque le mors rapporté (16) vient se poser sur le mors de base (14), le mors rapporté (16) comportant la section de couplage (22) qui n'est pas prévue pour coopérer avec le boulon peut se poser sur la surface d'appui (26) du mors de base (14), et **en ce que** le mors rapporté (16) peut ensuite être pivoté autour de cette section de couplage (22) dans le sens du mors de base (14) jusqu'à ce que l'autre section de couplage (24) arrive dans la zone de préhension du boulon (18).

10. Dispositif (10) selon la revendication 9, **caractérisé en ce que** le boulon (18) et/ou la section de couplage (24) coopérant avec le boulon présente(nt) des chanfreins de guidage de telle sorte que, lorsque la section de couplage (24) arrive dans la zone de préhension du boulon (18), le boulon (18) est d'abord déplacé à l'encontre de l'élasticité du ressort et est bloqué par encliquetage en position de fixation dans la position de montage finale du boulon (18).

11. Dispositif ( 10) selon l'une des revendications précédentes, **caractérisé en ce qu'**il est prévu des moyens de verrouillage pour verrouiller le boulon dans sa position de fixation agissant contre la au moins une section de couplage.

12. Dispositif (10) selon l'une des revendications précédentes, **caractérisé en ce que** le mors de base ou, dans le cas de plusieurs mors de base, les mors de base sont mobiles dans le sens de déplacement par le biais d'une commande à crochet trapézoïdal (56).
